# EUROPEAN PATENT APPLICATION

(11) **EP 4 607 884 A1**
(43) Date of publication of application: **27.08.2025**
(21) Application number: 23886199.1
(22) Date of filing: 31.10.2023
(51) Int. Cl.: H04L 47/25, H04L 47/35, H04W 28/10, H04W 28/02, H04W 88/14

(54) **METHOD AND APPARATUS FOR TRANSMITTING INFORMATION ON BASIS OF TRAFFIC CHARACTERISTIC CHANGE IN WIRELESS COMMUNICATION SYSTEM**

(30) Priority: 03.11.2022 KR 20220145320
(71) Applicant: Samsung Electronics Co., Ltd., Suwon-si, Gyeonggi-do 16677 (KR)
(72) Inventor: BAE, Jaehyeon, Suwon-si Gyeonggi-do 16677 (KR); BAEK, Youngkyo, Suwon-si Gyeonggi-do 16677 (KR)
(74) Representative: HGF
(86) International application number: PCT/KR2023/017068
(87) International publication number: WO 2024/096503

(57) **Abstract**

The present disclosure relates to a 5G or 6G communication system for supporting higher data transmission rates. A method performed by a PCF entity in a wireless communication system comprises the steps of: receiving, from an AF entity, first information for indicating a change in a traffic characteristic; identifying a change in a service flow on the basis of the first information; and transmitting the first information to a UPF entity through a SMF entity.

## Description

### [Technical Field]

The disclosure relates to a wireless communication system, and more specifically, to a method and device for transmitting information based on changes in traffic characteristics in a wireless communication system (5G System).

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing endto-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide an apparatus and a method capable of effectively providing services in a wireless communication system.

### [Solution to Problem]

According to various embodiments of the disclosure, a method performed by a policy control function (PCF) entity in a wireless communication system may include receiving first information for indicating a change in traffic characteristics from an application function (AF) entity, identifying a change in a service flow, based on the first information, and transmitting the first information to a user plane function (UPF) entity through a session management function (SMF) entity, and a protocol data unit (PDU) set transmitted to a base station may be generated based on the first information and second information on the change in the service flow.

According to various embodiments of the disclosure, a method performed by a user plane function (UPF) entity in a wireless communication system may include receiving first information for indicating a change in traffic characteristics from a policy control function (PCF) entity through a session management function (SMF) entity, receiving second information on a change in a service flow from an application server (AS), and transmitting, to a base station, a protocol data unit (PDU) set generated based on the first information and the second information, and the change in the traffic characteristic may be identified based on the first information.

According to various embodiments of the disclosure, a policy control function (PCF) entity in a wireless communication system may include a transceiver and at least one processor coupled to the transceiver, and the at least one processor may receive first information for indicating a change in traffic characteristics from an application function (AF) entity, identify a change in a service flow, based on the first information, and transmit the first information to a user plane function (UPF) entity through a session management function (SMF) entity, and a protocol data unit (PDU) set transmitted to a base station may be generated based on the first information and second information on the change in the service flow.

According to various embodiments of the disclosure, a user plane function (UPF) entity in a wireless communication system may include a transceiver and at least one processor coupled to the transceiver, and the at least one processor may receive first information for indicating a change in traffic characteristics from a policy control function (PCF) entity through a session management function (SMF) entity, receive second information on a change in a service flow from an application server (AS), and transmit, to a base station, a protocol data unit (PDU) set generated based on the first information and the second information, and the change in the traffic characteristic may be identified based on the first information.

### [Advantageous Effects of Invention]

Embodiments set forth herein provide an apparatus and a method capable of effectively providing services in a mobile communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a diagram illustrating a network structure and interface of a 5G system according to an embodiment of the disclosure.
FIG. 2 is a diagram illustrating transmission of traffic characteristic change information within a flow on a control plane through a 5G system according to an embodiment of the disclosure.
FIG. 3 is a diagram illustrating a method of transmitting to a radio access network (RAN) considering characteristics within a video service flow according to an embodiment of the disclosure.
FIGS. 4A to 4C are diagrams illustrating frame marking real time transport protocol (RTP) header extension information for transmitting an interface protocol (IP) packet transmitted from an application server (AS) to a user plane function (UPF) according to an embodiment of the disclosure.
FIG. 5 is a diagram illustrating PDU set-based QoS handling and scheduling utilizing traffic change assistance information according to an embodiment of the disclosure.
FIG. 6 is a block diagram illustrating a structure of a UE according to an embodiment of the disclosure.
FIG. 7 is a block diagram illustrating a structure of a base station according to an embodiment of the disclosure.
FIG. 8 is a block diagram illustrating a structure of a network entity according to an embodiment of the disclosure.

### [Mode for the Invention]

3GPP, which is in charge of cellular mobile communication standards, is naming a new core network structure as 5G core (5GC) and standardizing the same in order to advance the evolution from 4G LTE system to 5G system. 5GC supports the following differentiated functions compared to the evolved packet core (EPC), which is the network core for 4G.

In 5GC, a network slice function is introduced. As a requirement of 5G, 5GC should support various types of UE types and services. For example, UEs/services such as enhanced mobile broadband (eMBB), ultra-reliable low latency communications (URLLC), and massive machine type communications (mMTC) each have different requirements for the core network. For example, an eMBB service may require a high data rate, and a URLLC service may require high stability and low latency. To satisfy these various service requirements, network slice technology has been proposed.

Network slicing may mean a method of virtualizing a single physical network to generate multiple logical networks (e.g., network slices). An activated network slice may be referred to as a network slice instance, and each network slice instance (NSI) may have different characteristics. A mobile network operator may satisfy various service requirements according to the UE/service by configuring a network function (NF) suitable for each NSI's characteristics. For example, the mobile network operator may efficiently support multiple 5G services (e.g., eMBB, URLLC, or mMTC) by allocating an NSI suitable for the characteristics of the service required for each UE.

5GC may easily support the network virtualization paradigm by separating the mobility management function and the session management function. In 4G LTE, all UEs may receive services from the network through a signaling exchange with a single core entity called the mobility management entity (MME) that is responsible for registration, authentication, mobility management, and session management functions. In 5G, as the number of UEs (e.g., including MTC UEs) increases explosively and the mobility and traffic/session characteristics that must be supported according to the type of UEs are subdivided, if a single entity (e.g., MME) supports all functions, the scalability of adding entities for each required function is bound to decrease. Therefore, various functions are being developed based on a structure that separates the mobility management function and the session management function to improve scalability in terms of the function/implementation complexity and signaling load of the core entity responsible for the control plane.

Hereinafter, embodiments of the disclosure will be described in detail in conjunction with the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification. For the same reason, in the accompanying drawings, some elements may be exaggerated, omitted, or schematically illustrated. Also, the size of each element does not completely reflect the actual size. In the respective drawings, the same or corresponding elements are assigned the same reference numerals. The advantages and features of the technical idea according to the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of an eNode B, a Node B, a base station (BS), a radio access network (RAN), an access network (AN), a RAN node, a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, or other similar services. Furthermore, based on determinations by those skilled in the art, the embodiments of the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, microcodes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the case of metaverse and XR applications, since the UE must transmit and receive a large amount of traffic, effectively processing the traffic must solve important technical problems, unlike existing applications. Unlike previous studies that have mainly focused on effectively transmitting traffic from application servers to UEs, metaverse/XR traffic is a new challenge that must be solved to effectively process service flows with a large amount of traffic and various characteristics.

In the case of metaverse and XR applications, a large amount of data must be transmitted, and a method of reducing network congestion may be applied for effective scheduling. To this end, XRM introduced a method for data forwarding and processing in PDU units by considering the characteristics within the flow for efficient scheduling in the existing simple 5-tuple-based flow unit data forwarding concept in UPF. In the application layer, data forwarding and processing in PDU units with similar characteristics may be distinguished as a logical unit called a PDU set.

To solve the problem in the disclosure, a method for accurate processing when processing data in units of PDU in UPF is proposed by providing, to the control plane, information on the change in characteristics when the characteristics of data traffic transmitted from an application server or UE in a service flow change according to network conditions and requests, or by including the information in RTP header extension information, etc. to provide information on the change time point in characteristics and related information during real-time data transmission of a service flow.

According to the disclosure, when traffic characteristics (data rate, codec type, etc.) in a service flow change due to congestion in the network, UPF may be informed of the change in characteristics in the service flow through information on the control plane for the UPF to recognize information on the change time point, etc. or in-band signaling. Through this, when the UPF processes data in PDU units (PDU sets) considering the characteristics of the application layer, information for processing a bundle of PDU units with the same characteristics is transmitted, so that efficient services may be provided even when traffic characteristics change depending on the network situation. In addition, when separate in-band signaling is not provided due to operator policies, etc., the change in traffic characteristics and related information may be informed to the policy control function (PCF) through AF, so that the UPF may be informed of packet detection rules considering traffic changes.

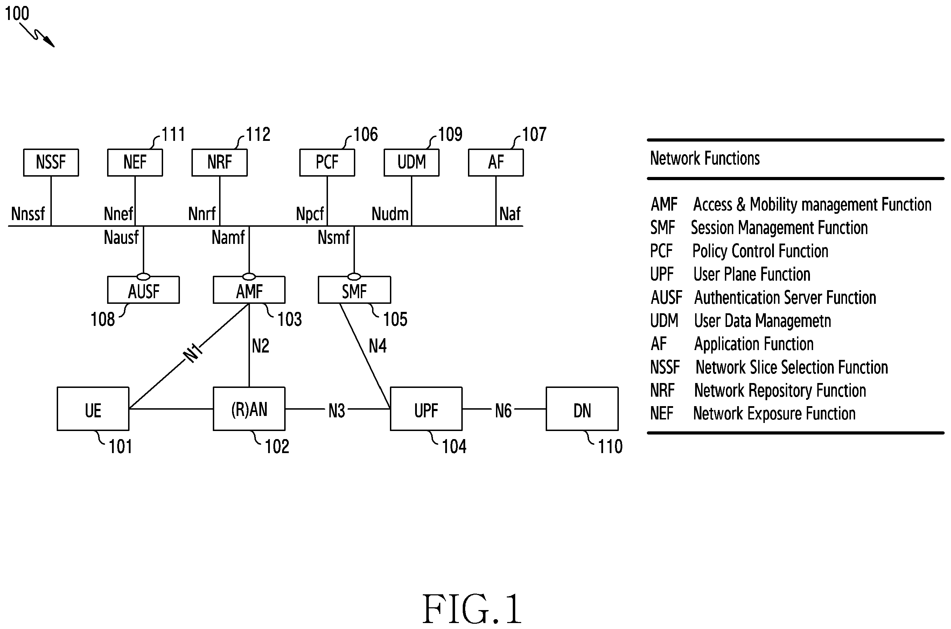

FIG. 1 is a diagram illustrating a network structure and interface of a 5G system according to an embodiment of the disclosure. A network entity included in the network structure of the 5G system of FIG. 1 may include a network function (NF) according to system implementation.

Referring to FIG. 1, the network structure of a 5G system 100 may include various network entities. As an example, the 5G system 100 may include an authentication server function (AUSF) 108, an access and mobility management function (AMF) 103, a session management function (SMF) 105, a policy control function (PCF) 106, an application function (AF) 107, a unified data management (UDM) 109, a data network (DN) 110, a network exposure function (NEF) 111, an edge application service domain repository (EDR) (not shown), an edge application server (EAS) (not shown), an EAS discovery function (EASDF) (not shown), a user plane function (UPF) 104, a (radio) access network ((R)AN) 102, and a UE, i.e., a user equipment (UE) 101.

Each NF of the 5G system 100 may support the following functions.

The AUSF 108 may process and store data for authentication of the UE 101.

The AMF 103 may provide a function for a UE unit access and mobility management, and may be connected to one AMF per one UE. Specifically, AMF 103 may support signaling between CN nodes for mobility between 3GPP access networks, termination of radio access network (RAN) CP interface (i.e., N2 interface), termination of non-access stratum (NAS) signaling (N1), NAS signaling security (NAS ciphering and integrity protection), AS security control, registration management (registration area management), connection management, idle mode UE reachability (including control and performance of paging retransmission), mobility management control (subscription and policy), intra-system mobility and inter-system mobility, network slicing, and SMF selection. In addition, the AMF 103 may support functions such as lawful intercept (for AMF events and interfaces to the LI system), providing for delivery of session management (SM) messages between the UE and the SMF, a transparent proxy for routing SM messages, access authentication, access authorization including roaming authorization checks, providing for delivery of SMS messages between the UE and the SMSF, a security anchor function (SAF) and/or security context management (SCM). Some or all functions of the AMF 103 may be supported within a single instance of one AMF.

The DN 110 may refer to, for example, an operator service, Internet access, or a third party service. The DN 110 may transmit a downlink protocol data unit (PDU) to the UPF 104, or may receive, from the UPF 104, a PDU transmitted from the UE 101.

The PCF 106 may receive information on packet flow from the application server and provide a function of determining policies such as mobility management, session management, etc. Specifically, the PCF 106 may support functions such as supporting a unified policy framework to control network behavior, providing policy rules so that control plane function(s) (e.g., AMF, SMF, etc.) may enforce the policy rules, implementing a front end to access relevant subscription information for policy determination within the user data repository (UDR), etc.

The SMF 105 may provide a session management function, and when the UE has multiple sessions, each session may be managed by a different SMF. Specifically, the SMF 105 may support session management (e.g., session establishment, modification, and termination, including tunnel maintenance between the UPF 104 and (R)AN 102 nodes), UE IP address allocation and management (optionally including authentication), UP function selection and control, traffic steering configuration to route traffic to appropriate destinations in the UPF 104, termination of the interface towards policy control functions, enforcement of policy and quality of service (QoS) control part, and lawful intercept (for SM events and interfaces to LI systems). In addition, the SMF 105 may support functions such as termination of the SM part of the NAS message, downlink data notification, initiator of AN specific SM information (transmitted to the (R)AN 102 via N2 through the AMF 103), determination of SSC mode of the session, roaming function, etc. Some or all functions of the SMF 105 may be supported within a single instance of one SMF.

The UDM 109 stores user subscription data, policy data, etc. The UDM 109 may include two parts, namely, an application front end (FE) (not shown) and a user data repository (UDR) (not shown).

The FE includes UDM FE which is responsible for location management, subscription management, credential processing, etc., and PCF which is responsible for policy control. The UDR may store data required for functions provided by the UDM-FE and policy profiles required by the PCF. Data stored in the UDR may include user subscription data and policy data including subscription identifier, security credential, access and mobility related subscription data, and session related subscription data. The UDM-FE may access subscription information stored in the UDR and support functions such as authentication credential processing, user identification handling, access authentication, registration/mobility management, subscription management, and SMS management.

The UPF 104 may transmit the downlink PDU received from the DN 110 to the UE 101 through the (R)AN 102, and transmit the uplink PDU received from the UE 101 to the DN 110 through the (R)AN 102. Specifically, the UPF 104 may support an anchor point for intra/inter RAT mobility, an external PDU session point for interconnect to the data network, packet routing and forwarding, a user plane part of packet inspection and policy rule enforcement, lawful intercept, traffic usage report, and uplink classifier to support routing of traffic flows to the data network. In addition, the UPF 104 may support functions such as branching points to support multi-homed PDU sessions, QoS handling for the user plane (e.g., packet filtering, gating, uplink/downlink rate enforcement), uplink traffic validation (service data flow (SDF) mapping between QoS flows), transport level packet marking in uplink and downlink, downlink packet buffering, and downlink data notification triggering. Some or all functions of the UPF 104 may be supported within a single instance of one UPF.

The AF 107 may interact with a 3GPP core network to provide a service (e.g., support functions such as application impact on traffic routing, access to network capability exposure, interaction with policy frameworks for policy control, etc.).

The (R)AN 102 may collectively refer to a new radio access network supporting both evolved E-UTRA (E-UTRA) that is an evolved version of 4G radio access technology and new radio (NR) technology (e.g., gNB).

The gNB may support functions (i.e., radio bearer control, radio admission control, connection mobility control, dynamic allocation of resources to the UE in uplink/downlink (i.e., scheduling), internet protocol (IP) header compression, encryption and integrity protection of user data streams, selection of AMF upon UE attach when routing to AMF is not determined from information provided to the UE, routing of user plane data to UPF(s), routing of control plane information to AMF, connection setup and release) for radio resource management. In addition, the gNB may support functions such as scheduling and forwarding of paging messages (generated from AMF), scheduling and forwarding of system broadcast information (generated from AMF or operating and maintenance (O&M)), configuration of measurement and measurement reporting for mobility and scheduling, transport level packet marking in uplink, session management, support for network slicing, QoS flow management and mapping to data radio bearers, support for a UE in inactive mode, NAS message distribution, NAS node selection, radio access network sharing, dual connectivity, tight interworking between NR and E-UTRA, etc.

The UE 101 may refer to a user device. The user device may be referred to a UE, a mobile equipment (ME), a mobile station (MS), etc. In addition, the user device may be a portable device such as a laptop, a mobile phone, a personal digital assistant (PDA), a smartphone, or a multimedia device, or a non-portable device such as a personal computer (PC) or a vehicle-mounted device.

The NEF 111 may provide a means to safely expose services and capabilities for, for example, 3rd party, internal exposure/re-exposure, application functions, and edge computing provided by 3GPP network functions. The NEF 111 may receive information from other NF(s) (based on the exposed capability(s) of other NF(s)). The NEF 111 store the received information as structured data by using a standardized interface to a data storage network function. The stored information may be reexposed by the NEF 111 to other NF(s) and AF(s), and may be used for other purposes such as analysis, etc.

The EASDF (not shown) may be an NF capable of adding an ECS option that may be expressed as the address of a DNS server to forward DNS the request of a UE for each FQDN, and the IP subnet address that should be added when forwarding the DNS request of the UE. The EASDF (not shown) may receive the EAS domain configuration information from the EDR (not shown), and may process the DNS request message received from the UE according to the received information.

In addition, the EASDF (not shown) may be an NF that receives a UE IP address, location information of the UE within 3GPP, DNS message processing rules, and DNS message reporting rules from the SMF 105, processes a DNS query message received from a UE and a DNS response message received from a DNS server, and performs the function of transmitting information in a DNS message and statistical information processed therefrom to the SMF 105 according to the DNS message reporting rules.

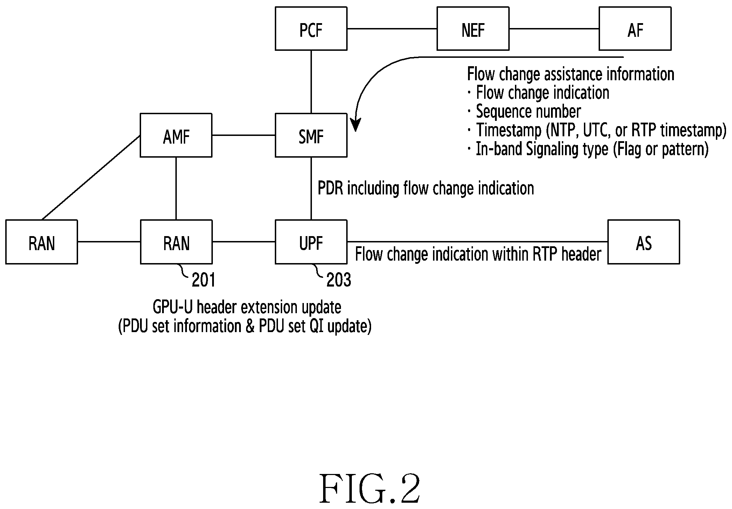

All NFs illustrated in FIG. 2 may interact with the NRF 112 as necessary.

The NRF 112 may support a service discovery function. The NRF 112 may receive a NF discovery request from an NF instance and provide information of the discovered NF instance to the NF instance. In addition, the NRF 112 may maintain available NF instances and services they support.

Meanwhile, for convenience of description, FIG. 1 illustrates a reference model for a case where the UE 101 accesses one DN 110 by using one PDU session, but the disclosure is not limited thereto.

The UE 101 may simultaneously access two (i.e., local and central) data networks by using multiple PDU sessions. In this case, two SMFs may be selected for different PDU sessions. However, each SMF may have the ability to control both the local UPF and the central UPF within the PDU session.

In addition, the UE 101 may simultaneously access two (i.e., local and central) data networks provided within a single PDU session.

In 3GPP systems, conceptual links connecting NFs in the 5G system may be defined as "reference points". As an example, reference points included in the 5G system 100 of FIG. 1 are as follows.
- N1: a reference point between a UE 101 and an AMF 103
- N2: a reference point between an (R)AN 102 and an AMF 103
- N3: a reference point between an (R)AN 102 and a UPF 104
- N4: a reference point between an SMF 105and a UPF 104
- N5: a reference point between a PCF 106 and an AF 107
- N6: a reference point between a UPF 104 and a DN 110
- N7: a reference point between an SMF 105 and a PCF 106
- N8: a reference point between a UDM 109 and an AMF 103
- N9: a reference point between two core UPFs 104
- N10: a reference point between a UDM 109 and an SMF 105
- N11: a reference point between an AMF 103 and an SMF 105
- N12: a reference point between an AMF 103 and an AUSF 108
- N13: a reference point between a UDM 109 and an AUSF 108
- N14: a reference point between two AMFs 103
- N15: a reference point between a PCF and an AMF for a non-roaming scenario, and a reference point between a PCF and an AMF in a visited network for a roaming scenario
- Nx: a reference point between an SMF 105 and an EASDF (not illustrated)
- Ny: a reference point between an NEF 111 and an EASDF (not illustrated)

FIG. 2 is a diagram illustrating transmission of traffic characteristic change information within a flow on a control plane through a 5G system according to an embodiment of the disclosure. In the existing 5G system, the QoS flow within the PDU session is a way to express the smallest unit of QoS difference. 5G QoS characteristics may be determined by 5 QoS identifier (QI). This may mean that each packet within the same QoS flow is processed according to the same QoS requirement. In the XR service, each group of packets within the service flow may be handled through the PDU set payload.

For example, a video flow may be composed of packets consisting of I, B, or P frame, but according to the existing 5G QoS definition, the QoS of the service flow may be determined according to the media characteristics and service characteristics and may be transmitted to a UPF 203 as 5QI information. The media characteristics may be related to the video characteristics. The UPF 203 may transmit the QoS of the service flow to a RAN 201 through QFI marking for each service flow, and the RAN 201 may perform QoS scheduling based on the QFI information for each service flow. However, the video flow has a correlation between each frame in units of group of pictures (Gop). Therefore, the video flow must successfully receive the I frame in the Gop in order for the UPF 203 to successfully decode other frames (B or P frame) in the Gop. According to an embodiment of the disclosure, packets may be randomly discarded due to congestion occurring in a 5GS (5G system). According to an embodiment of the disclosure, if a packet of a service flow composed of an I-frame is dropped, the receiving end cannot perform I-frame-based decoding, so even if packets composed of other frame packets (B or P-frames) are successfully transmitted, it is meaningless and causes a waste of radio resources. In addition, even frames that generally compose the same video service flow may have different characteristics for each frame. For example, the I frame may have a data size that is 5 times larger than the B frame and 20 times larger than the P frame. When scheduling a service flow composed of packets with different characteristics, if the correlation and characteristics between packets considering the characteristics of the application layer are not considered, low-efficiency QoS scheduling is inevitably performed. In order to prevent the above problems, packets with the same or similar characteristics having the same service flow may be logically grouped and processed as PDU set units. In this case, by transmitting information for each PDU set together through the GPRS (global system for mobile communications) tunneling protocol types-user plane (GTP-U) header, the RAN 201 may perform efficient scheduling (e.g., packet drop, etc.) based on the importance and correlation of the PDU set based on the information for each PDU set. The purpose of packet processing using PDU sets is to perform QoS scheduling based on different importance and QoS requirements for each group of packets within the same service flow. In this way, the UPF 203 may classify packets within a service flow and logically group packets by the same characteristics (for example, I, B, or P frame in the case of video) and define a logical unit of packets as a PDU set. Considering the characteristics (data rate, delay budget, etc.) of each PDU set, QoS characteristics for each packet (PDU set) may be applied by using PDU set QoS that considers different characteristics of each PDU set, so that QoS scheduling may be efficiently performed in the RAN 201. The characteristics of each PDU set may be based on the characteristics of packets within an actual flow.

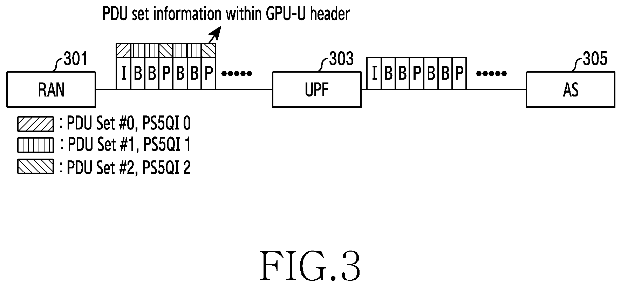

FIG. 3 is a diagram illustrating a method of transmitting to a RAN 301 considering characteristics within a video service flow according to an embodiment of the disclosure. Referring to FIG. 3, the service flow may be transmitted to a UPF 303 through an AS 305. In addition, the service flow may be classified and transmitted for each PDU set, and the classified information may be included in the GTP-U header. It is assumed that in the 5G network, the UPF 303 may transmit PDU set information through the GTP-U header for packet processing in units of PDU set, and the RAN 301 may perform QoS scheduling by using PDU set-related information (PDU set QoS ID (PSQI), PDU set parameter, etc.). In FIG. 3, a change in traffic characteristics in the XR service flow currently being serviced may be determined when the AF (not shown) monitors network conditions, has network requests such as congestion reports, or by the selection of a service provider. The traffic characteristic change determination may be determined by the AS 305 and transmitted to the AF, or the AF (not shown) may receive a network condition report, and, based on the received network condition, the AF (not shown) may determine and perform traffic change through the AS 305. If the AS 305 or the AF (not shown) determines to change the traffic characteristics within the XR service flow currently in service, flow change assistance information may be transmitted to the PCF (not shown) through the NEF. The flow change assistance information may include flow change point information in the flow such as a flow change indication, a sequence number (SN) and a time stamp based on information in the RTP header, or information in the form of a pattern or flag, by utilizing the reserved bit file in the RTP extension header. The PCF (not shown) may receive the flow characteristic change assistance information through the AF (not shown) and update the policy and charging control (PCC) rule based on the change information and transmit the same to the SMF (not shown). When the SMF (not shown) identifies that the PDU set QoS profile information needs to be updated through the flow characteristic change information based on the updated PCC rule, the SMF may transmit the PDU set QoS profile information to the RAN 301. Alternatively, when an update based on the standard PDU set QoS ID is performed, the flow characteristic change information may be transmitted to the UPF 303 through the N4 session modification process. The UPF 303 may recognize change point information such as a certain time (timestamp) based on the new packet detection rule and flow characteristic change information received through the N4 session modification process, and transmit the updated characteristic-based PDU set QoS ID and PDU set parameters in the GTP-U header after the change point, thereby informing the RAN 301 of the changed characteristic information of the PDU set. The RAN 301 may perform QoS scheduling by applying the related PDU set QoS profile based on the PDU set QoS ID and PDU set parameters.

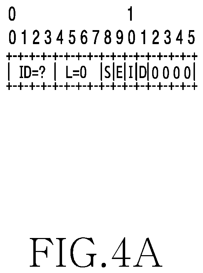

FIGS. 4A to 4C are diagrams illustrating frame marking real time transport protocol (RTP) header extension information for transmitting an interface protocol (IP) packet transmitted from an AS to a UPF according to an embodiment of the disclosure. The IP packet transmitted from the AS to the UPF may be transmitted based on RTP protocol and frame.

FIG. 4A is a diagram illustrating a reserved field of frame marking RTP header extension when characteristic change point information is notified through in-band signaling according to an embodiment of the disclosure.

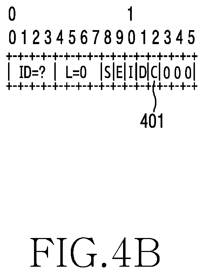

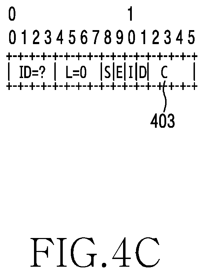

FIG. 4B is another diagram illustrating a reserved field of frame marking RTP header extension when characteristic change point information is notified through in-band signaling according to an embodiment of the disclosure. Referring to FIG. 4B, a C flag 401 indicating the start of the traffic characteristic change point may be inserted by using information of 1 bit of the last 4 bits of the reserved field among the 2-byte frame marking header extension information. FIG. 4C is another diagram illustrating a reserved field of frame marking RTP header extension when characteristic change point information is notified through in-band signaling according to an embodiment of the disclosure. Referring to FIG. 4C, more detailed information may be transmitted in a pattern manner by utilizing the last 4 bits 403 of the frame marking header extension information of FIG. 4A. For example, when pattern information of 4 bits is utilized when the last four bits 403 are marked with 0001, if information on a codec type change is indicated or marked with 0010, a data rate change may be indicated. By informing of changes in specific traffic characteristics in this way, the AS may transmit, to the UPF, the exact value by including the value in the GTP-U header, when transmitting PDU set marking or PDU set information in the GTP-U header to the RAN based on the basic traffic change point information as well as what information has changed.

The disclosure may support the following two functions to identify and transmit traffic change information.

First, it is possible to determine changes in traffic characteristics (codec change (codec type, GOP, framerate, etc.), data rate change, etc.) of the XR service flow currently in service by the AF or network request and report the this to the UPF through the PCF as traffic change assistance information within the flow.

Second, when the traffic change point of the AS is transmitted in the AF session-related QoS requirement update message or inform the traffic change point through in-band signaling (e.g., RTP extension header, etc.), the traffic change information may be notified to the PCF. When the traffic change point is notified by in-band signaling (RTP extension header, etc.), the PCF may determine PCC rule and policy updates based on QoS requirements that reflect the traffic characteristics to be changed. The PCC rule and policy updates determined by the PCF may be transmitted to the UPF and RAN based on the PDR information update and PDU set QoS profile update through the SMF, and the PDU set QFI information to be changed may be notified to the UPF. In addition, the UPF may transmit the PDU set QFI information updated after the traffic characteristic change point to the RAN through the GTP-U extension header to perform QoS scheduling for each updated PDU set.

These functions include the following AF request, NEF service provision, classification policy by PDU set according to traffic characteristics in the service flow in PCF, determination process of traffic characteristic change policy, updated PDU set QFI according to traffic characteristic change in SMF, and information on change point, and may be transmitted to the UPF through the N4 rule. The UPF may include characteristics such as traffic change detection and changed PDU set QFI in GTP-U confirmation header, and report the result after traffic change in the UPF to the SMF. When the AF requests traffic characteristic change, if there is no PDU set QoS profile that reflects the updated traffic characteristics in the existing PDU set QoS profile, the PCF may provide a function to update the PDU set QoS profile based on existing PDU set QoS profiles.

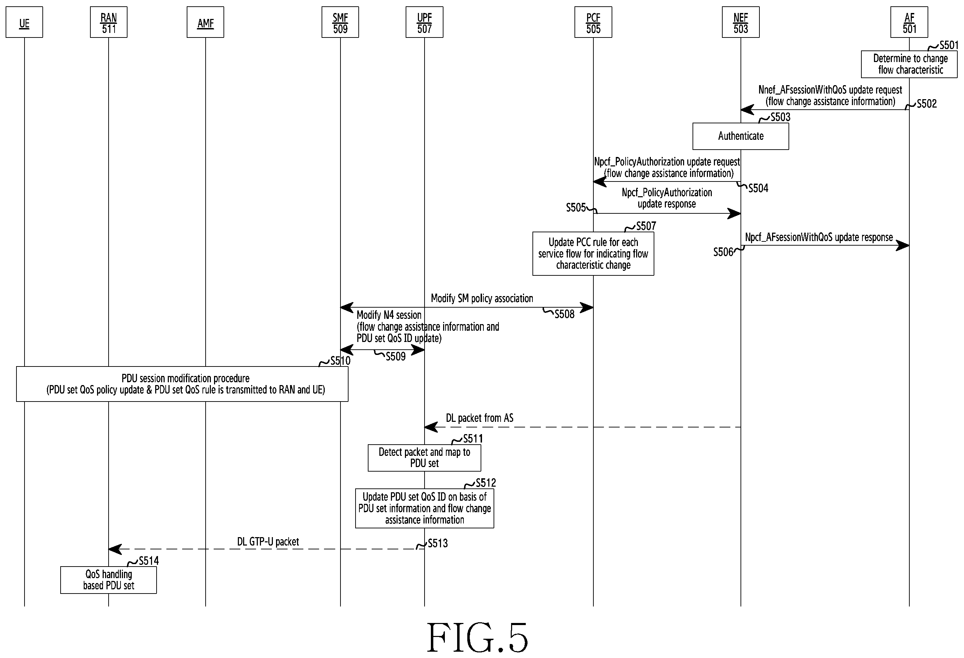

The detailed operation of the disclosure is described through the procedure of FIG. 5.

FIG. 5 is a diagram illustrating PDU set-based QoS handling and scheduling utilizing traffic change assistance information according to an embodiment of the disclosure. Referring to FIG. 5, when the traffic characteristics of the XR service flow providing the service are changed due to network conditions (such as congestion reports) or a request from a service provider while using the XR service, the change information may be transmitted from an AF 501 to a PCF 505 as traffic change assistance information (e.g., flow change assistance info) in the AF session QoSrelated request message. The PCF 505 may transmit updated characteristic-based information (updated PDU set QoS ID & PDU set QoS profile) to a RAN 511 and a UPF 507 as traffic change-related information through PCC rule update step. The UPF 507 may include the changed traffic change information (updated PDU set QoS ID and PDU set parameter) in GTP-U header of packet after the change point based on the traffic change point information in the traffic change assistance information transmitted by the AF 501 and transmit the traffic change point information to the RAN 511. Through this, the UPF 507 may recognize the exact traffic change point and update PDU set QoS ID, etc. based on the information of the changed traffic and transmit the same to RAN the 511, and the RAN 511 may perform QoS scheduling according to the updated PDU set.

In step S501, the AF 501 may determine to change the characteristics of the XR service flow currently in service by determination of the AS (not shown) or the AF 501. The determination to change the characteristics of the characteristics of the XR service flow currently in service may be determined by the AF 501 based on the network situation such as a congestion situation reported by the AS (not shown), or the AF 501 may determine to change the traffic characteristics of the service flow through network monitoring. The determination of the change in the traffic characteristics by the service flow in the AF 501 is for traffic management, etc.

For example, when determining to change the characteristics of the service flow by considering the network situation due to a congestion situation report, etc., the AF 501 may adjust the data rate of the traffic of the XR service flow currently in service. When determining to change the characteristics of the service flow, the AF 501 may transmit flow change assistance information including traffic characteristic change point information to the PCF 505. In this case, the change point information may include information indicating that a traffic characteristic change occurs after a certain period of time by referring to the sequence number of the header, such as the RTP protocol or timestamp information in the header.

For example, when the AF 501 notifies the change point based on RTP timestamp, in the case of the video-related flow, a change of the minimum GOP unit is required for packet processing within the flow, and in this case, the change point may be notified several seconds or minutes later than a specific timestamp of the AS (not shown). The UPF 507 may recognize that when a packet including the I frame after the change point comes into the UPF 507 based on the change point information based on the timestamp, the packets after the packet at the change point change to the traffic characteristic requested by the AF 501 and have the changed PDU set characteristics. The UPF 507 may transmit the changed PDU set QoS ID and PDU set information, etc. to the RAN 511 through the GTP-U header.

In addition, instead of time information using the reference time of packets such as timestamps in the RTP header, traffic change time information may be transmitted as absolute time, such as flow change time using system time, etc. In addition, it is possible to inform the UPF 507 of the traffic characteristic change time and the type of change information by using the reserved bit field in the RTP extension header as illustrated in FIG. 4 when the AS (not shown) transmits traffic, in addition to the method of transmitting information related to traffic characteristic change point to the UPF 507 as information on the control plane through the AF 501.

For example, when utilizing information (RTP sequence or timestamp) in the RTP protocol header, the traffic characteristic change point may be generated and notified as information that notifies the point in time when a change is requested after a certain time or SN based on the reference information (RTP sequence or RTP timestamp) in the header. If RTP timestamp is the reference, it may be expressed as the reference time (reference timestamp) and the change point (2 * Gop ms). The AF 501 may generate traffic characteristic change point information by including traffic change reference information and reference point and change point information. In an example, the UPF 507 may receive traffic change assistance information including traffic characteristic change point information, and recognize the change point based on the timestamp in the packet header currently being received to recognize the change point based on the traffic change assistance information. In addition, the UPF 507 may recognize that the traffic characteristic changes after (2* Gop ms) from the reference time specified by the AF 501 in the traffic characteristic change information. The UPF 507 may perform mapping from the packet at the point of the changed traffic characteristic information to a PDU set suitable for the new characteristic and transmit the related information by including the same in the GTP-U header.

Depending on the service provider or implementation method, the AF 501 may inform the change point by in-band signaling instead of transmitting the traffic characteristic change information through a control plane message. As illustrated in FIG. 4, if the AS (not shown) transmits video data to the UPF 507 by using the frame marking RTP method and includes in-band type traffic characteristic change information, the AF 501 may notify that the in-band type traffic characteristic change information is reflected in the frame marking RTP header extension information through the PCF 505, thereby allowing the UPF 507 to recognize and process the information in the reserved field of the frame marking RTP header extension. If additional information is included and transmitted to the UPF 507 as in the embodiment of the disclosure based on basic frame marking RTP header extension information, such as in the case of FIG. 4B or FIG. 4C, the AF 501 may inform the UPF 507 of the updated frame marking RTP header extension type (frame marking RTP header extension includes change indication (flag or pattern)) to reflect traffic characteristic change information. Through the updated frame marking RTP header extension type, the AF 501 may inform the UPF 507 that traffic characteristic change information is transmitted to the reservation field in the frame marking RTP confirmation header. The UPF 507 may detect characteristic change point information in the header and recognize the characteristic change point in the flow based on the characteristic change point information. The UPF 507 may transmit updated PDU set-related information and PDU set QoS ID, etc. that have changed the traffic characteristics (data rate, codec type change, etc.) to the RAN 511 through the GTP-U header at the request of a service provider or network, so that the RAN 511 may perform QoS scheduling through the PDU set QoS profile based on the changed traffic characteristic.

When the change point is notified through in-band signaling according to the method of transmitting the characteristic change point in the flow, basically, the protocol, media type, and codec information should be transmitted to inform the header location information. If the AF 501 directly informs change point information through a control plane message, reference information included in the header and request point information and change point information based on reference information must be transmitted based on protocol, media type, and codec information so that the UPF 507 may recognize and utilize the reference information, request point information, and change point information.

As illustrated in FIG. 4, the UPF 507 may know that the payload within the packet includes data having a frame through the RTP header extension information related to frame marking, and in this case, the type of information transmitted by the headers may vary depending on the type of codec. For example, the expression of packet-related information within the RTP header extension information may be expressed differently depending on the type of codec. The UPF 507 uses the RTP protocol of the packet of the flow, and may receive N6 protocol and header information on whether the header is AVC-based, HEVC-based, or VVC-based payload header extension information through the AF 501.

In FIG. 4, the RTP header extension information related to frame marking may include information such as the type of the packet frame and whether the packet is the start packet or the end packet of the frame in the header, and may be transmitted. The UPF 507 may detect information required for PDU set generation based on the RTP header indicator information, and may utilize the information when classifying and mapping the information to PDU sets by considering the characteristics of packets within the service flow. In addition, the UPF 507 may transmit PDU set-related information used for PDU set mapping to the RAN 511 through GTP-U header, so that the RAN 511 may utilize the information when scheduling QoS per PDU set.

Since the frame marking RTP extension information of FIG. 4 and other information are transmitted to the audio-related RTP header extension information, it is necessary to transmit the protocol and media type, and codec information so that the UPF 507 may identify and utilize the exact location of the information in the exact header.

In this way, the UPF 507 may identify packet types and packet information in the codec-based protocol header through the AF 501 based on the N6 protocol and codec, protocol including media type information, and codec indicator information for classification of packets transmitted through AS (not shown). The protocol and codec indicator information may be transmitted as a separate QoS requirement, or if traffic changes occur while using the service flow as in the disclosure, and traffic characteristics to be changed are related to the codec information, the traffic characteristics to be changed may be included in the traffic characteristic change assistance information and transmitted.

In this way, traffic characteristic change assistance information may include traffic characteristic information to be changed, such as protocol and codec indicator information, and information on the time at which the traffic characteristic changes.

In step S502, the AF 501 may transmit an AF session service operation update request message including QoS requirements including traffic characteristic change assistance information to the NEF 503.

In steps S503 and S504, the NEF 503 may authorize XR service QoS requirement information including traffic characteristic change information and then transmit the same to the PCF 505 through a policy authorization service update request message.

In step S507, the PCF 505 may perform PCC rule update for performing PDU set-based QoS scheduling based on traffic characteristic change assistance information received through the AF 501. In this case, the PCF 505 may know whether the traffic of the service flows composing the XR service will be changed, based on the traffic characteristic change-related information received from the AF 501 for each service flow (video, voice, haptic, etc.). Depending on the traffic characteristic change information, the PDU set QoS profile and PDU set QoS ID information generated based on the characteristic information of the existing service flow may be changed. The PCF 505 may reflect the updated PDU set QoS profile and PDU set QoS ID, rule, etc. based on the traffic characteristic change assistance information through PCC rule update.

For example, there may be three types of frames (I, B, or P frames) within the same video service flow. In this case, the network or service provider may determine efficient QoS scheduling based on the PDU set and inform the PCF 505 of the determined QoS scheduling through the PDU set handling indication such as the AF 501. In this case, in addition to the PDU set handling indication, application layer service information (e.g., codec type or encoder vbr) may be transmitted together for PDU set handling. Based on the application layer service information, the PCF 505 may be able to generate a PDU set QoS profile considering the characteristics of each PDU set.

For example, in the case of the I frame, since the frame must be transmitted to the UE and decoded, the PCF 505 may configure the PDU set error rate (PSER) to 99.99%. In the AS (not shown), if the encoder parameter configuration is VBR, and the PDU set maximum bit rate (PSMBR) is assumed to be 20 Mbps based on 4K, the PCF 505 may configure the value of PSMBR of the I frame PDU set to 20 Mbps and PSQI to 1. Similarly, in the case of B frame, since one or two frames are broken, the UE does not become unplayable or the service is not unavailable, the PCF 505 may configure the PSER value with a little more margin within 99%. Since the B frame generally has a size of 1/20 of the I-frame data rate, the PCF 505 may configure the PSMBR of the B frame to 1 Mbps based on the I-frame, and in this case, the PSQI may be configured to 3. In addition, the P frame has less importance than the B frame, but since the P frame includes related information, the PCF 505 may configure the PSER to 99.9%. In the case of the PSMBR of the P frame, as in the examples of the I and B frames, the P frame has a size of 1/5 of the I frame at 4K 20 Mbps, so the PCF 505 may configure the PSMBR to 4 Mbps, and in this case, the PSQI may be configured to 2.

In this way, when processing packets by PDU set considering the characteristics of the application layer, different data rates and importance are applied depending on the type of packet and media type, different QoS profiles (such as PSMBR and PSER) must be used for processing within the same service flow unlike the existing method.

In addition, since each packet has different importance even within the same service flow, the importance of the PSU set may be configured like parameters in the existing QoS profile by using PDU set ARP.

According to an embodiment, the importance of the PDU set of I, B, or P frame in the service flow may be configured according to the importance of the frame. For example, in the case of a configuration of I, B, or P, the PDU set ARP of the I frame may be configured to 0, the PDU set ARP of the P frame may be configured to 1, and the PDU set ARP of the B frame may be configured to 2 to indicate the relative importance between frames.

In this way, the PCF 505 may receive separate application layer assistance information through the AF 501 or may identify the application layer assistance information by using information given to the existing network to configure the QoS profile, etc. of the PDU set by using the application layer information.

For example, in the case of a video service, the PCF 505 may determine the delay budget (PSDB) value of the PDU set by utilizing the value of the GOP, which is the interval between I frames. However, if separate application layer assistance information is not provided through the AF 501, the period value between the two burst data may be predicted by using the periodicity value in the TSCAI. For example, the characteristics of the periodicity value within the TSCAI are similar to the characteristics that the I frame, which is a characteristic of the video service flow, arrives first within each GOP interval and the data of the I frame is the largest, so the periodicity value within the TSCAI may be utilized.

The PCC rule including the traffic characteristic change assistance information in the service flow may include the following information.

Service data flow information (service data flow template, SDF) including IP source/destination address or range, source/reception port number or range, or FQDN value or FQDN range (FQDN range expressed in regular expression format) information capable of identifying a service flow whose traffic characteristics are to be changed may be included in the PCC rule.

In addition, the flow characteristic change indicator for each service flow, a flow characteristic change type (e.g., codec type, data rate.) to be changed, and traffic characteristic change assistance information including the information to be changed, may be included in the PCC rule.

In step S508, the PCF 505 in step S507 may determine a policy update based on the traffic characteristic change assistance information received from the AF 501 and transmit the updated PCC rule based on this to the SMF 509.

In step S509, the SMF 509 receiving the updated PCC rule based on the changed service flow characteristics from the PCF 505 may transmit the SDF template including the PDU set QoS ID updated through the N4 session modification process and traffic characteristic change information including traffic change point information, etc. to the UPF 507. In addition, depending on the type of codec in the UPF 507, the information in the header transmitted through N6 may be different depending on the type of transmission protocol. Therefore, the SMF 509 may receive the type of protocol and the type of codec (RTP/SRTP header and payload info) transmitted from the AS (not shown) through N6 through the AF 501 and include them in the SDF template transmitted to the UPF 507 to transmit them. Through this, the UPF 507 may detect PDU set-related information from the protocol header or extension header transmitted through N6 and utilize the same when generating PDU sets. For example, the RTP extension header information including frame marking information basically includes information on whether the frame is basically I frame, a start packet or end packet of a frame, or a removable packet, in the header. Based on this, the UPF 507 may determine whether the packet corresponds to the PDU set of the I frame and provide information on whether the received packets are the start and the end of the PDU set of the frame, and based on this, PDU set-related information may be generated and utilized. The PDU set-related information generated through the above process may be included in the GTP-U header and transmitted by the UPF 507 to the RAN 511.

In step S510, PDU set QoS profile by PDU set reflecting traffic characteristic change information changed in step S507 by the PCF 505 in response to the request of the AF 501 may be applied to the RAN 511.

In step S511, the UPF 507 may identify the traffic change point within the service flow based the traffic change point information received through step S509. Thereafter, UPF 507 may determine whether the traffic change point information transmitted from the AF 501 among the packet header information received from the AS (not shown) is traffic change point information based on the sequence number or traffic change point information based on the timestamp, and may determine the traffic change point by using the information in the header of the received packet. If the traffic change point information is used to identify that the information in the traffic header is a packet before the change point, the UPF 507 may perform QoS scheduling by using the previous PSQI-based PDU set QoS profile by including the PDU set QoS ID and related PDU set parameters for each PDU set in the existing XR service flow in the GTP-U header and transmitting them to the RAN 511. In this case, the UPF 507 may include PDU set identifier (PSID) indicating the unique identifier of the PDU set, PDU start and end information (start PDU & end PDU of the PDU set) within the PDU set and a PDU SN within the PDU set, PDU set importance information, etc. in PDU set-related parameters.

In step S512, the UPF 507 may identify the traffic change point based on the traffic change point information transmitted through the AF 501 based on the packet header information.

The UPF 507 may transmit packets received from the AS (not shown) after the traffic change point to the RAN 511 by including the packets in the GTP-U header. The UPF 507 may include an updated PDU set QoS ID and PDU set-related parameters in the GTP-U header according to changed traffic characteristics (codec type, data, etc.) determined through the AF 501 or AS (not shown).

For example, if the GOP interval of the existing video frame is determined to be changed from 1 second to 250ms to improve the real-time performance of the interaction service among XR services, updating of PDU set delay budget for each PDU set in the PDU set QoS profile is required, and considering this, the PDU set QoS ID and related PDU set QoS profile may also need to be updated.

In this way, even if an existing service is used through the same service flow due to a determination of a service provider, traffic-related characteristic information within the service flow may change. The PCF 505 may determine and perform updating the PDU set-related QoS information according to a change in traffic characteristics within the service flow in step S507. In step S513, the UPF 507 may, through the GTP-U header, receive the updated PSQI information, etc. and transmit the updated PSQI and PDU set related information to the RAN 511 based on the SDF template to the PDU set configured based on the prepared traffic change information based on the traffic change point information.

In step S514, the RAN 511 may perform QoS scheduling based on PSQI information in the GTP-U header. The RAN 511 may select a PDU set QoS profile that matches the traffic characteristics and perform QoS scheduling based on PSQI information in the GTP-U header, based on the PDU set QoS ID in the GTP-U header transmitted from the UPF 507.

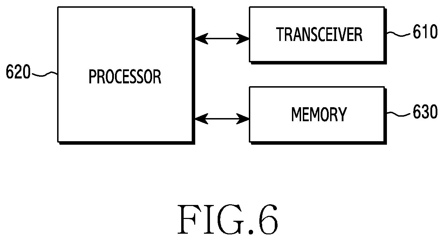

FIG. 6 is a block diagram illustrating a structure of a UE according to an embodiment of the disclosure.

As illustrated in FIG. 6, a UE of the disclosure may include a processor 620, a transceiver 610, and a memory 630. However, components of the UE are not limited to the above-described example. For example, the UE may include a larger or smaller number of components than the above-described components. In addition, the processor 620, the transceiver 610, and the memory 630 may be implemented in the form of a single chip.

According to an embodiment of the disclosure, the processor 620 may control a series of processes so that the UE can operate according to the above-described embodiments of the disclosure. The processor 620 may control the components of the UE to perform the embodiments of the disclosure by executing the programs stored in the memory 630. In addition, the processor 620 may be an application processor (AP), a communication processor (CP), a circuit, an application -specific circuit, or at least one processor.

According to an embodiment of the disclosure, the transceiver 610 may transmit/receive signals with base stations. The signals transmitted/received with base stations may include control information and data. The transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. In addition, the transceiver 610 may receive signals through a radio channel, output the same to the processor 620, and transmit signals output from the processor 620 through the radio channel.

According to an embodiment of the disclosure, the memory 630 may store programs and data necessary for operations of the UE. In addition, the memory 630 may store control information or data included in signals transmitted/received by the UE. The memory 630 may include storage media such as a ROM, a RAM, a hard disk, a CD-ROM, and a DVD, or a combination of storage media.

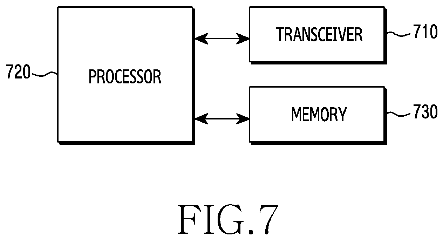

FIG. 7 is a block diagram illustrating a structure of a base station according to an embodiment of the disclosure.

As illustrated in FIG. 7, a base station of the disclosure may include a processor 720, a transceiver 710, and a memory 730. However, components of the base station are not limited to the above-described example. For example, the base station may include a larger or smaller number of components than the above-described components. In addition, the processor 720, the transceiver 710, and the memory 730 may be implemented in the form of a single chip.

According to an embodiment of the disclosure, the processor 720 may control a series of processes so that the NF can operate according to the above-described embodiments of the disclosure. The processor 720 may control the components of the base station to perform the embodiments of the disclosure by executing programs stored in the memory 730. In addition, the processor 720 may include at least one processor.

According to an embodiment of the disclosure, the transceiver 710 may transmit/receive signals with network entities, other base stations, or UEs. The signals transmitted/received with network entities, other base stations, or UEs may include control information and data. The transceiver 710 may include an RF transmitter configured to up-convert and amplify the frequency of transmitted signals, an RF receiver configured to low-noise-amplify received signals and down-convert the frequency thereof, and the like. However, this is only an embodiment of the transceiver 710, and the components of the transceiver 710 are not limited to the RF transmitter and the RF receiver. In addition, the transceiver 710 may receive signals through a radio channel, output the same to the processor 720, and transmit signals output from the processor 720 through the radio channel.

According to an embodiment of the disclosure, the memory 730 may store programs and data necessary for operations of the base station. In addition, the memory 730 may store control information or data included in signals transmitted/received by the base station. The memory 730 may include storage media such as a ROM, a RAM, a hard disk, a CD-ROM, and a DVD, or a combination of storage media.

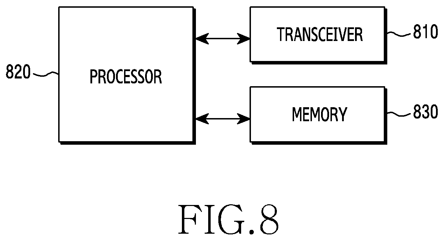

FIG. 8 is a block diagram illustrating a structure of a network entity according to an embodiment of the disclosure.

As illustrated in FIG. 8, a network entity of the disclosure may include a processor 820, a transceiver 810, and a memory 830. However, components of the network entity are not limited to the above-described example. For example, the network entity may include a larger or smaller number of components than the above-described components. In addition, the processor 820, the transceiver 810, and the memory 830 may be implemented in the form of a single chip. The network entity may include a UPF, a DN, an AMF, an SMF, a UPF, an AUSF, a PCF, a UDM, an AF, an NEF, an NRF, and an AS. However, this is only for the sake of descriptive convenience, and is not intended to exclude other types of network entities.

According to an embodiment of the disclosure, the processor 820 may control a series of processes so that the NF can operate according to the above-described embodiments of the disclosure. The processor 820 may control the components of the network entity to perform the embodiments of the disclosure by executing programs stored in the memory 830. In addition, the processor 820 may include at least one processor.

According to an embodiment of the disclosure, the transceiver 810 may transmit/receive signals with base stations or other network entities. The signals transmitted/received with base stations or other network entities may include control information and data. The transceiver 810 may include an RF transmitter configured to up-convert and amplify the frequency of transmitted signals, an RF receiver configured to low-noise-amplify received signals and down-convert the frequency thereof, and the like. However, this is only an embodiment of the transceiver 810, and the components of the transceiver 810 are not limited to the RF transmitter and the RF receiver. In addition, the transceiver 810 may receive signals through a radio channel, output the same to the processor 820, and transmit signals output from the processor 820 through the radio channel.

According to an embodiment of the disclosure, the memory 830 may store programs and data necessary for operations of the network entity. In addition, the memory 830 may store control information or data included in signals transmitted/received by the network entity. The memory 830 may include storage media such as a ROM, a RAM, a hard disk, a CD-ROM, and a DVD, or a combination of storage media. In addition, the memory 830 may include multiple memories.

According to embodiments of the disclosure as described above, in a method performed by a user plane function (UPF) in a wireless communication system, the method may include receiving change assistance information including traffic change information and traffic point information from the session management function (SMF) and the policy control function (PCF), generating a protocol data unit (PDU) set based on the assistance change information, wherein the PDU set is included in the GTP-U (GPRS (global system for mobile communications) tunneling protocol types-user plane)) header of the UPF, and transmitting the PDU set to the base station through the GTP-U header, and wherein the change assistance information may be generated by the AF and transmitted to the SMF through the network exposure function (NEF) and the policy control function (PCF).

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a policy control function (PCF) entity in a wireless communication system, the method comprising:
receiving first information for indicating a change in traffic characteristics from an application function (AF) entity;
identifying a change in a service flow, based on the first information; and
transmitting the first information to a user plane function (UPF) entity through a session management function (SMF) entity,
wherein a protocol data unit (PDU) set transmitted to a base station is generated based on the first information and second information on the change in the service flow.

2. The method of claim 1, wherein the first information comprises information on a time point at which the service flow is changed.

3. The method of claim 2, wherein the information on the time point at which the service flow is changed is indicated based on a sequence number or a timestamp.

4. The method of claim 2, wherein the second information is included in a real time transport protocol (RTP) header extension field and comprises a 1-bit change flag or a 4-bit change pattern.

5. A method performed by a user plane function (UPF) entity in a wireless communication system, the method comprising:
receiving first information for indicating a change in traffic characteristics from a policy control function (PCF) entity through a session management function (SMF) entity;
receiving second information on a change in a service flow from an application server (AS); and
transmitting, to a base station, a protocol data unit (PDU) set generated based on the first information and the second information,
wherein the change in the traffic characteristics is identified based on the first information.

6. The method of claim 5, wherein the first information comprises information on a time point at which the service flow is changed.

7. The method of claim 6, wherein the information on the time point at which the service flow is changed is indicated based on a sequence number or a timestamp.

8. The method of claim 6, wherein the second information is included in a real time transport protocol (RTP) header extension field and comprises a 1-bit change flag or a 4-bit change pattern.

9. A policy control function (PCF) entity in a wireless communication system, the PCF entity comprising:
a transceiver; and
at least one processor coupled with the transceiver,
wherein the at least one processor is configured to:
receive first information for indicating a change in traffic characteristics from an application function (AF) entity;
identify a change in a service flow, based on the first information; and
transmit the first information to a user plane function (UPF) entity through a session management function (SMF) entity,
wherein a protocol data unit (PDU) set transmitted to a base station is generated based on the first information and second information on the change in the service flow.

10. The PCF entity of claim 9, wherein the first information comprises information on a time point at which the service flow is changed.

11. The PCF entity of claim 10, wherein the information on the time point at which the service flow is changed is indicated based on a sequence number or a timestamp.

12. The PCF entity of claim 10, wherein the second information is included in a real time transport protocol (RTP) header extension field and comprises a 1-bit change flag or a 4-bit change pattern.

13. A user plane function (UPF) entity in a wireless communication system, the UPF entity comprising:
a transceiver; and
at least one processor coupled with the transceiver,
wherein the at least one processor is configured to:
receive first information for indicating a change in traffic characteristics from a policy control function (PCF) entity through a session management function (SMF) entity;
receive second information on a change in a service flow from an application server (AS); and
transmit, to a base station, a protocol data unit (PDU) set generated based on the first information and the second information,
wherein the change in the traffic characteristics is identified based on the first information.

14. The UPF entity of claim 13, wherein the first information comprises information on a time point at which the service flow is changed, and
wherein the second information is included in a real time transport protocol (RTP) header extension field and comprises a 1-bit change flag or a 4-bit change pattern.

15. The UPF entity of claim 14, wherein the information on the time point at which the service flow is changed is based on a sequence number or a timestamp.
